# EUROPÄISCHE PATENTSCHRIFT

(11) **EP 2 377 575 B1**
(45) Veröffentlichungstag und Bekanntmachung des Hinweises auf die Patenterteilung: **10.10.2012**
(21) Anmeldenummer: 10004145.8
(22) Anmeldetag: 19.04.2010
(51) Int. Cl.: A61N 5/10, G01T 1/185, G21K 1/02

(54) **Raster-Dosimetrievorrichtung**
Grid dosimetry device
Dispositif de dosimétrie à trame

(43) Veröffentlichungstag der Anmeldung: 19.10.2011
(73) Patentinhaber: X-Alliance GmbH, 22335 Hamburg (DE)
(72) Erfinder: Dührßen, Rolf Nic, 21220 Seevetal (DE); Kaiser, Rolf, 26188 Edewecht (DE); Neumann, Volker, 22453 Hamburg (DE)
(74) Vertreter: Samson & Partner

(56) Entgegenhaltungen:
- WO-A1-90/15420
- WO-A1-2005/006986
- DE-A1-102007 024 402

## Beschreibung

### GEBIET DER ERFINDUNG

Die vorliegende Erfindung betrifft die Gebiete der Dosimetrievorrichtungen und der Streustrahlenraster für Röntgenvorrichtungen.

### HINTERGRUND DER ERFINDUNG

Ein Streustrahlenraster (Röntgenraster) ist eine Vorrichtung in der Röntgentechnik, die vor dem Bildempfänger (Bildschirm, Detektor oder Film) angebracht ist und den Einfall von Streustrahlung auf diesen reduziert. Streustrahlen entstehen überwiegend durch Ablenkung der Röntgenstrahlen im durchleuchteten Objekt, z.B. durch Ablenkung durch Knochen oder anderes Gewebe. Die das Bild erzeugende Strahlung ist direkt von der Röntgenröhre auf den Bildträger gerichtet, Streustrahlung jedoch im Wesentlichen beliebig. Die auf dem analogen Röntgenfilm bzw. auf dem digitalen Detektor auftreffende Streustrahlung verschlechtert den Kontrast der Röntgenaufnahme und ist deshalb unerwünscht. Mit Hilfe eines Röntgenrasters wird bewirkt, dass die Streustrahlung z.B. von Bleilamellen absorbiert wird und nicht auf dem Röntgenfilm auftritt. Dadurch wird die Qualität, bzw. der Kontrast, der entstehenden Röntgenaufnahme deutlich erhöht. Die Streustrahlung vermindert vor allem den Strahlenkontrast, da sie als Schleier über dem Röntgenbild liegt.

Die WO 90/15420 offenbart ein Röntgenstrahlraster für medizinische Radiographie und ein Verfahren zur Herstellung desselben. Das Röntgenstrahlraster wird mittels typischer Leiterplattenbeschichtungstechniken hergestellt. Eine röntgenstrahlundurchlässige Materialschicht (z.B. Bleifolie) der gewünschten Dicke wird auf einen röntgenstrahldurchlässigen Träger, wie beispielsweise Polyesterfolie, geklebt unter Verwendung einer dünnen Schicht eines heiß-schmelzenden oder drucksensitiven Klebers. Auf die sich ergebende Anordnung wird das gewünschte Muster von Gitterlinien in Form einer Polymerbeschichtung aufgebracht, beispielsweise unter Anwendung einer Fotolacktechnologie, Elektrofotografie oder lithografischen Druckens. Das sich ergebende Laminat wird dann elektrochemisch geätzt, um das Blei von den Flächen zu entfernen, die nicht vom aufgedruckten Muster bedeckt sind.

Die US 4,288,697 offenbart einen Kollimator für Röntgenstrahlen, der mittels fotoätzender Techniken hergestellt wird. Mit den fotoätzenden Techniken, die in der Halbleitertechnik zur Herstellung integrierter Schaltkreiselemente verwendet werden, kann eine Reihe von dünnen kollimierenden Laminierungen gebildet werden, die eine sehr große Anzahl sehr kleiner und eng beabstandeter Strahlungsdurchgänge bilden, die nicht notwendigerweise eine kreisförmige Querschnittsanordnung aufweisen müssen.

Die US 6,885,729 B2 offenbart ein Antistreustrahlungsgitter und ein Verfahren zur Herstellung desselben. Die Gitterelemente umfassen eine Schicht aus einem Röntgenstrahlung stark absorbierendem Material, wie Gold, Kupfer, Tantal oder Blei, auf einem Substrat aus einem Röntgenstrahlung schwach absorbierendem Material. Für die Herstellung der Gitterelemente werden Metallablagerungstechniken angewandt, wie bei der Herstellung von Leiterplatten.

Die US 7,356,126 B1 offenbart ein Antistreustrahlengitter für eine strahlenbasierte Bildgebungsvorrichtung. Das Antistreustrahlengitter weist eine Vielzahl von Röntgenstrahlen absorbierenden Streifen auf, die durch Röntgenstrahlen durchlässige Zwischenstreifenräume voneinander getrennt sind. Die Abmessungen der Zwischenstreifenräume sind nicht konstant. Die Streifen werden unter Anwendung von Metallablagerungstechniken gebildet, wie bei der Herstellung von Leiterplatten.

Die DE 10 2007 024 402 A1 offenbart eine Dosimetrievorrichtung, bei der mehrere erste Elektroden auf einer gedruckten Leiterplatte ausgebildet sind, sowie mehrere zweite Elektroden auf einem weiteren der Leiterplatte über einen ionisierbaren Raum gegenüberliegenden Substrat. Eine Signalverarbeitungsschaltung ist auf der anderen Seite der Leiterplatte vorgesehen, und mit Durchkontakten mit den mehreren ersten Elektroden verbunden.

Ferner sind aus dem Stand der Technik Dosimetrievorrichtungen (Messkammern) bekannt, die fünf Paare gegenüberliegender kreisförmiger Metallplatten aufweisen. Diese Messkammern werden in der Literatur auch als 3-Felder-Messkammern bezeichnet. Die gegenüberliegenden Metallplatten weisen einen Abstand zwischen 8 mm bis 11 mm auf, und haben einen Durchmesser von typischerweise 7 bis 8 cm. Die Metallplatten erzeugen Sekundärelektronen beim Auftreffen der Röntgenstrahlung. Zwischen den gegenüberliegenden Platten ist eine Spannung angelegt. Zwischen den Platten befindet sich Luft, die durch die Röntgenstrahlung ionisiert wird. Diese Messvorrichtung ist typischerweise an einer bestimmten Stelle des Röntgenbereichs angeordnet sind. Da diese Stellen jedoch vom menschlichen Körper überdeckt sein können, ist die Messung unter Umständen nicht repräsentativ für den gesamten bestrahlten Bereich und eine Hochrechnung auf den gesamten bestrahlten Bereich kann nicht durchgeführt werden.

### KURZFASSUNG DER ERFINDUNG

Gemäß einem ersten Aspekt der Erfindung wird eine Raster-Dosimetrievorrichtung bereitgestellt, welche ein erstes Streustrahlenraster umfasst, das zugleich als eine erste Elektrode einer Dosimetrievorrichtung dient, sowie eine von der ersten Elektrode beabstandete zweite Elektrode, wobei zwischen den beiden Elektroden eine Spannung anlegbar ist.

Gemäß einem zweiten Aspekt der Erfindung wird ein Verfahren zur Röntgendosisbestimmung bereitgestellt, welches umfasst Bestrahlen eines ersten Streustrahlenrasters, das zugleich als erste Elektrode einer Dosimetrievorrichtung dient, und einer von der ersten Elektrode beabstandeten zweiten Elektrode mit einer Röntgenstrahlung, wobei zwischen den beiden Elektroden eine Spannung angelegt ist, Messen eines Stromflusses zwischen den beiden Elektroden, der durch die Ionisierung des zwischen den beiden Elektroden liegenden Materials verursacht wird, um eine Angabe über die Dosis oder Dosisleistung zu machen.

Weitere Merkmale sind in den offenbarten Vorrichtungen und Verfahren offenbart oder werden für den Fachmann aus der folgenden detaillierten Beschreibung von Ausführungsformen und der beigefügten Zeichnungen offensichtlich

### KURZE BESCHREIBUNG DER ZEICHNUNGEN

Ausführungsformen der Erfindung werden im Folgenden beispielhaft und unter Bezugnahme auf die beiliegenden Zeichnungen beschrieben, in denen
Fig. 1 ein Röntgensystem mit einer Raster-Dosimetrievorrichtung gemäß einer Ausführungsform der Erfindung zeigt;
Fig. 2 eine schematische Ansicht von schräg oben auf eine erfindungsgemäße Ausführungsform einer Raster-Dosimetrievorrichtung zeigt, bei der sich zwischen den oberen und unteren Leiterbahnen Luft befindet;
Fig. 3a eine Querschnittsansicht einer Raster-Dosimetrievorrichtung mit Isoliermaterial zwischen den Leiterbahnen gemäß einer Ausführungsform der Erfindung zeigt;
Fig. 3b eine Querschnittsansicht einer Raster-Dosimetrievorrichtung mit Luft zwischen den Leiterbahnen gemäß einer Ausführungsform der Erfindung zeigt;
Fig. 4 eine Querschnittsansicht einer Raster-Dosimetrievorrichtung mit zweischichtigen Leiterbahnen gemäß einer Ausführungsform der Erfindung zeigt;
Fig. 5a eine Draufsicht auf ein oberes und unteres (gestricheltes) Streustrahlenraster einer Raster-Dosimetrievorrichtung gemäß einer Ausführungsform der Erfindung zeigt, bei der die Leiterbahnen in konzentrischen Kreisen ausgebildet sind;
Fig. 5b eine 3D-Ansicht der in Fig. 5a gezeigten oberen und unteren kreisförmigen Streustrahlenraster zeigt;
Fig. 6 eine Draufsicht auf ein oberes und unteres Streustrahlenraster einer Raster-Dosimetrievorrichtung gemäß einer Ausführungsform der Erfindung zeigt, bei der die Leiterbahnen gitterförmig ausgebildet sind; und
Fig. 7 einen schematischen Aufbau einer typischen Messschaltung zeigt, die an eine Raster-Dosimetrievorrichtung anschließbar ist und eine Angabe über die Dosis oder die Dosisleistung erlaubt.

Die Zeichnungen und die Beschreibung der Zeichnungen beziehen sich auf Ausführungsformen der Erfindung und nicht auf die Erfindung selbst.

### BESCHREIBUNG BEVORZUGTER AUSFÜHRUNGSFORMEN

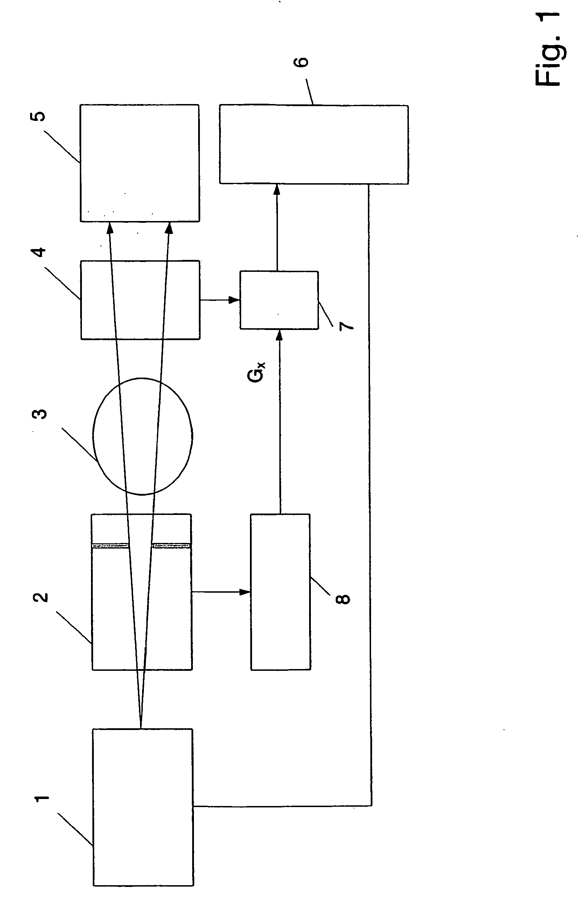

Fig. 1 zeigt ein Röntgensystem mit einer Raster-Dosimetrievorrichtung 4 gemäß einer Ausführungsform der Erfindung. Bevor jedoch mit der Beschreibung der Fig. 1 fortgefahren wird, werden einige Merkmale der Ausführungsformen diskutiert.

Einige Ausführungsformen beziehen sich auf eine Raster-Dosimetrievorrichtung, welche ein erstes Streustrahlenraster umfasst, das zugleich als eine erste Elektrode einer Dosimetrievorrichtung dient, sowie eine von der ersten Elektrode beabstandete zweite Elektrode, wobei zwischen den beiden Elektroden eine Spannung anlegbar ist.

Der Begriff "Raster-Dosimetrievorrichtung" bedeutet dabei, dass es sich bei dem vorliegenden beanspruchten Gegenstand um eine Kombination aus einem Streustrahlenraster und einer Dosimetrievorrichtung handelt. Die Idee der Erfindung besteht also darin, ein Streustrahlenraster mit einer Dosimetrievorrichtung in einer einzigen Anordnung zu kombinieren, während in herkömmlichen Röntgensystemen das Streustrahlenraster eine von der Dosimetrievorrichtung getrennte Vorrichtung darstellt. Die Erfindung bewirkt, dass die Dosismessung über den gesamten Bereich des Streustrahlenrasters ausgeführt werden kann. In herkömmlichen Röntgenvorrichtungen findet die Röntgendosismessung in einer Messkammer statt, die nur einen kleinen Teil des Aufnahmefeldes abdeckt. Somit kann nur spezifisch an bestimmten Stellen eine Aussage über die Dosis gemacht werden. Das Problem bei herkömmlichen Messkammern ist ferner, dass sie im Röntgenbild sichtbar sind. Aufgrund der besseren Bildauflösung der digitalen Detektoren wird gerade diesem Problem in letzter Zeit immer mehr Beachtung geschenkt. Ferner steigt bei sichtbaren Messfeldern auch die Gefahr einer Fehldiagnose.

Eine Dosimetrievorrichtung ist dabei eine Vorrichtung, die ausgelegt ist, die Röntgendosis bzw. Röntgendosisleistung, die beim Röntgen einer Person, eines Tieres oder eines sonstigen Gegenstandes auftritt, zu messen. Eine Dosimetrievorrichtung ist üblicherweise in Röntgenapparaten vorgesehen, um ein Abschalten der Röntgenröhre zu veranlassen, sobald ein gewisser Dosiswert festgestellt wurde. Die Dosimetrievorrichtung kann auch dazu verwendet werden, die Leistung der Röntgenröhre zu steuern, zum Beispiel je nach Objekt die an der Röntgenröhre anliegende Spannung zu reduzieren oder zu erhöhen (= sog. kV-Dosisleistungsregelung).

Eine Röntgenaufnahme ist eine mit Röntgenstrahlen erstellte Fotografie. Da sich Röntgenstrahlen nicht mit Linsen und nur sehr schwer mit Spiegeln (streifende Reflexion) bündeln lassen, sind Röntgenaufnahmen meist Schattenbilder eines durchleuchteten Objekts. Die Röntgenröhre, das Objekt und das röntgenstrahlenempfindliche Element (Röntgenfilm, Röntgenspeicherfolie oder Matrix von Szintillations- oder Festkörperdetektoren) müssen dabei eine Achse bilden.

Röntgenstrahlung hat eine ionisierende Wirkung. Die Anzahl der durch die Röntgenstrahlen in Luft gebildeten Ionen ist ein Maß für die Intensität der Strahlung. Als Ionendosis J oder Exposition bezeichnet man das Verhältnis der durch Ionisierung in Luft gebildeten Ladung Q zur Masse m der durchstrahlten Luft.

Gemäß der Erfindung wird ein Streustrahlenraster als eine erste Elektrode verwendet und eine zweite Elektrode ist in einem Abstand zur ersten Elektrode angeordnet. Zwischen den beiden Elektroden (Kathode und Anode) wird eine Spannung angelegt, so dass, wenn durch die Ionisation Elektronen freigesetzt werden, die Elektronen von der Anode angezogen werden und die positiv geladenen Moleküle von der Kathode angezogen werden. Die Elektroden sind über einen Strommesser miteinander verbunden, der den zwischen ihnen fließenden Strom misst. Dieser Strom kann in einigen Ausführungsformen über eine Zeitdauer hinweg integriert werden, zum Erhalt der in dieser Zeitdauer erzeugten Ionisationsladung Q, die im Verhältnis zur Masse m der durchstrahlten Luft die Ionendosis angibt. Diese Ionendosis lässt sich dann von der Luft auf Muskelgewebe des Menschen umrechnen.

Erfindungsgemäß wird das Röntgenstrahlen absorbierende Material des Streustrahlenrasters zugleich als elektrisch leitendes Elektrodenmaterial einer Dosimetrievorrichtung benutzt. (Eine Elektrode ist ein Elektronenleiter, der im Zusammenspiel mit einer Gegenelektrode mit einem zwischen beiden Elektroden befindlichen Medium in Wechselwirkung steht.)

Während in einigen Ausführungsformen das Streustrahlenraster mittels elektrisch leitender Leiterbahnen verwirklicht ist, die als Elektrode der Dosimetrievorrichtung dienen, ist in anderen Ausführungsformen das (klassische) Streustrahlenraster mittels Bleilamellen verwirklicht, die ebenfalls als Elektrode fungieren können.

In einigen Ausführungsformen ist das als erste Elektrode dienende Streustrahlenraster zusätzlich mit einer Elektrodenschicht, zum Beispiel einem Silberleitlack beschichtet, die die leitfähige Fläche der Elektrode vergrößert.

In anderen Ausführungsformen werden die die Elektroden bildenden Leiterbahnen an ihren Enden mit einem Rahmen zusammengefasst, so dass alle Leiterbahnen auf demselben elektrischen Potential liegen.

Während in einigen Ausführungsformen die Raster-Dosimetrievorrichtung mit einem Strommessgerät versehen ist, das einen durch Ionisationswirkung der Röntgenstrahlung entstehenden Stromfluss (Stromstärke) misst, der direkt mit der Strahlungsdosisleistung korreliert, wird in anderen Ausführungsformen der Stromfluss zunächst zeitlich integriert und dann mit der Strahlungsdosis korreliert.

In einigen Ausführungsformen ist das erste Streustrahlenraster durch Aufbringen von Leiterbahnen mittels Leiterplattenbeschichtungstechnik hergestellt. Die Herstellung der Leiterbahnen erfolgt in der Regel fotolithografisch, indem eine dünne Schicht lichtempfindlichen Fotolacks auf die Oberfläche der noch vollständig mit z.B. Kupfer bedeckten Platte aufgebracht wird. Nach der Belichtung des Fotolacks durch eine Maske mit dem gewünschten Layout sind je nach verwendetem Fotolack entweder die belichteten oder die unbelichteten Anteile des Lacks löslich in einer passenden Entwicklerlösung und werden entfernt. Bringt man die so behandelte Leiterplatte in eine geeignete Ätzlösung (z. B. in Wasser gelöstes Eisen(III)-chlorid oder Natriumpersulfat oder mit Salzsäure+H₂O₂), so wird nur der freigelegte Teil der metallisierten Oberfläche angegriffen; die vom Fotolack bedeckten Anteile bleiben erhalten, weil der Lack beständig gegen die Ätzlösung ist. Zusätzlich können galvanisch auf Teilflächen oder der gesamten Kupferfläche metallische Schutz- und Kontaktschichten aus Zinn, Silber, Blei, Zink, Tantal, Wolfram, Selen, Silizium, Niob, Yttrium, Nickel, Gold oder Eisen aufgebracht werden. Die Leiterbahnen haben typischerweise eine Höhe von 50 µm -70 µm.

Mittels Lasertechnik, d.h. durch Weglasern von Leiterbahnenmaterial, können typischerweise über 100 bis 500 Linien/cm erreicht werden. Aufgrund einer höheren Linienzahl sind diese dann auch nicht mehr im Röntgenbild sichtbar, reduzieren aber nach wie vor die Streustrahlung. Somit entfällt die Anforderung an ein bewegliches Bucky-Raster. Hier ist ein großer Vorteil im einfachen Aufbau und auch im unkomplizierten Nachrüsten dieser Raster-Dosimetrievorrichtung zu sehen.

Mittels Lasertechnik können auch fokussierende Raster auf der Grundlage der Leiterplattenbeschichtungstechnik hergestellt werden. Dazu werden die Leiterbahnen mittels Laser so bearbeitet, dass sie auf eine Röntgenröhre hin gerichtet sind. Eine Fokussierung kann auch mittels photolithografischer Techniken erfolgen, bei der verschiedene Schichten der Leiterbahnen zueinander versetzt aufgebracht werden. Die so entstehenden Leiterbahnen absorbieren die Streustrahlung, so dass nur die in Strahlrichtung von der Röntgenröhre zum Bildaufnehmer gerichtete Röntgenprimärstrahlung durch das Raster dringen kann.

Während in einigen Ausführungsformen die Leiterbahnen nur aus einer Schicht bestehen, sind in anderen Ausführungsformen die Leiterbahnen mehrschichtig aus einer beliebigen Abfolge von Schichten aus Blei, Zinn, Gold, Wismut und/oder Kupfer oder anderen Metallen und deren Legierungen hergestellt. Dadurch ergibt sich eine sehr große Vielfalt von Kombinationsmöglichkeiten, die je nach der Röntgenapplikation, wie z.B. Mammographie, Röntgen-Thorax (Röntgenaufnahme des Brustkorbs) oder Röntgen-Pädiatrie (Röntgenaufnahmen von Kindern) optimiert werden kann. Durch den ausgereiften Prozess der Leiterplattenfertigung, angewendet zu Herstellung eines Röntgenrasters, ist gewährleistet, dass die Produktion schneller, stabiler und günstiger als das weiter unten beschriebene Verfahren zur Herstellung eines Standardrasters aus Bleilamellen ist. Ein weiterer Vorteil der Leiterplattenbeschichtungstechnik ist, dass um 90° versetzte Lamellen bei doppelt kaschierten Leiterplatten einen deutlich besseren Effekt als bei den weiter unter beschrieben Standardrastern erzielen, die nur in einer Richtung den Filtereffekt für Streustrahlung erfüllen. Durch den Fertigungsprozess können die Leiterbahnen sehr viel präziser und leichter als die Lamellen der Standardraster angeordnet werden. Darüber hinaus ist die Lösung mit Leiterplattenrastern auch unempfindlicher in Bezug auf Druck und Temperatur sowie Schockeinwirkungen und kann zu einem Bruchteil der Fertigungskosten der Standardraster produziert werden.

In einigen Ausführungsformen sind mittels der Leiterplattenbeschichtungstechnik 30 bis 500 Leiterbahnen pro Zentimeter aufgebracht. Die Produktionsmethode zur Herstellung eines Leiterplattenrasters ist viel einfacher, kostengünstiger und präziser beherrschbar als das Herstellungsverfahren der unten dargestellten Standard-Bleilamellenraster.

Einige Ausführungsformen der Erfindung beziehen sich auf ein (Standard-)Streustrahlenraster, das in Lamellenform aus schmalen Streifen von Röntgenstrahlen absorbierendem Material und Röntgenstrahlen durchlässigen Abstandhaltern aufgebaut ist. Dabei sind die Streifen parallel zur Strahlung ausgerichtet sind. Typischerweise sind die Lamellen aus Blei, die parallel zueinander positioniert sind. Es können sich bis zu 90 solcher Bleilamellen auf einem 1 cm befinden. Das Raster hat dieselbe Größe wie die Röntgenkassette oder der Röntgendetektor und ist direkt vor diesen Komponenten im Röntgenstrahlkanal installiert. Während Primärstrahlung für die Bildgebung genutzt wird, entsteht Streustrahlung durch die aufgrund der Anatomie (z.B. Knochen und Gewebe) abgelenkte Primärstrahlung. Sie trifft dann in einem flacheren Winkel auf den Detektor oder die Röntgenkassette auf. Dieses würde zu einer Verschlechterung der Bildqualität führen. Durch die Bleilamellen im Röntgenraster wird diese Streustrahlung ausgefiltert.

Raster können aus (auf die Röntgenröhre fokussierten) unterschiedlich geneigten Streifen oder parallelen Streifen aufgebaut sein. Fokussierte Raster eignen sich nur für den Abstand zwischen Röhre und Raster, für den sie konzipiert wurden. Parallele Raster hingegen haben bei geringem Abstand zur Röhre zum Rand hin Abschattungen und eignen sich nur für größere Fokusabstände. Um Streustrahlen in beiden Dimensionen zu reduzieren, werden zwei Raster im rechten Winkel benötigt, ein Wabenraster oder ein anderes zweidimensionales Raster.

Um keine streifige Abbildung zu erhalten, ist die Raster-Dosimetrievorrichtung in einigen Ausführungsformen als beweglich vorgesehen. Diese Bewegung wird durch eine Federvorspannung (Pendelraster) oder durch einen Linearmotor erzeugt. Vor der Belichtung wir das Raster aus der Federvorspannung entlassen und pendelt dann während der Aufnahme hin und her (Pendelraster) oder der Linearmotor startet die Bewegung vor der Aufnahme; läuft das Raster nicht schnell genug oder ist es mechanisch schwergängig, kommt es bei kürzeren Aufnahmezeiten (typisch 3-10 ms) zur Abbildung von "Steifen-Artefakten" des Rasters auf dem Bild.

In einigen Ausführungsformen sind die durchlässigen Abstandhalter Aluminium, Kunststofffolie oder Fasermaterial.

In einigen Ausführungsformen ist nicht nur die erste Elektrode, sondern auch die zweite Elektrode als ein Streustrahlenraster ausgebildet.

In einigen Ausführungsformen weist das erste und/oder das zweite Streustrahlenraster eine Gitterlinienstruktur auf.

Während in einigen Ausführungsformen das erste und das zweite Streustrahlenraster jeweils parallele geradlinige Leiterbahnen aufweisen, die zueinander um 90° versetzt sind, weist in anderen Ausführungsformen wenigstens eines der beiden Streustrahlenraster Kreisstrukturen in Form konzentrischer Kreise auf.

In einigen Ausführungsformen ist die Elektrode über den gesamten Bereich des Streustrahlenrasters ausgebildet, so dass eine Dosismessung über dem gesamten Bereich des Streustrahlenrasters vorgenommen werden kann. Das Streustrahlenraster ist in der Regel so groß wie die Röntgenkassette, so dass die Dosis über das gesamte Röntgenbild berechnet werden kann.

In einigen Ausführungsformen ist zwischen den beiden Elektroden ein Isolierkörper aus Kunststoff angeordnet. Der Isolierkörper hat typischerweise eine Dicke zwischen 2-4 mm. In einigen Ausführungsformen sind die Leiterbahnen (Elektroden) unmittelbar auf dem Isolierkörper aufgebracht. Ist ein Kunststoffkörper zwischen den Elektroden vorgesehen, so ist die an den Elektroden anliegende Spannung typischerweise 900 V. Ist zwischen den Elektroden Luft, so sollte die an den Elektroden anliegende Spannung typischerweise 400 V betragen.

Wie oben bereits beschrieben ist in einigen Ausführungsformen der Erfindung wenigstens eine der beiden Elektroden mit einer Silberleitlack versehen, aus der durch die ionisierende Röntgenstrahlung Elektronen freigesetzt werden.

In einigen Ausführungsformen ist die Raster-Dosimetrievorrichtung als Modul aufgebaut und kann in ein bestehendes Röntgensystem vor eine Röntgenkassette bzw. in einen Röntgendetektor integriert werden.

Einige Ausführungsformen beziehen sich auf ein Verfahren zum Bestrahlen eines ersten Streustrahlenrasters, das zugleich als erste Elektrode einer Dosimetrievorrichtung dient, und einer von der ersten Elektrode beabstandeten zweiten Elektroden mit einer Röntgenstrahlung, wobei zwischen den beiden Elektroden eine Spannung angelegt ist. Das Verfahren umfasst ein Messen eines zwischen den beiden Elektroden fließenden Stromes, der durch die Ionisierung des zwischen den beiden Elektroden liegenden Materials verursacht wird, um eine Angabe über die Dosis zu machen. In einigen Ausführungsformen wird der gemessene Stromfluss über eine Zeitdauer integriert, um eine Angabe über die Dosis oder Dosisleistung zu machen. Ist die Abschaltdosis erreicht, so wird ein Signal an einen Röntgengenerator weitergeleitet, der die Röntgenröhre abschaltet. Dies ist der bisher klassische Einsatz bei einer herkömmlichen Messkammer.

Alternativ oder zusätzlich steht auch während der Röntgenaufnahme ein kontinuierlicher Stromfluss an, der äquivalent zur Dosisleistung nGy/s steht. Dieses Dosisleistungsregelsignal kann nun zur kV-Dosisleistungsregelung dem Röntgengenerator zur Verfügung gestellt werden; es kann auch zum Regeln eines Röntgenstromes eines Röntgengenerators verwendet werden. Mit diesem dynamischen Signal kann dann auch eine Abschaltdosis ermittelt werden. D.h. bei vorgegebener Zeit (beispielsweise abhängig davon, ob sich das Objekt bewegt oder nicht; für die Lunge wählt man typischerweise eine Röntgenzeit von 10 ms) wird dann die Aufnahmespannung je nach Patientenstärke von einem Anfangspunkt z.B. 80 kV während der Aufnahmezeit dynamisch hoch- oder heruntergeregelt werden. Dadurch bekommt jeder Patient über die Gesamtdauer seine spezifisch richtige Aufnahmespannung.

Die Raster-Dosimetrievorrichtung verfügt also über eine statische Eigenschaft, d.h. hier wird der Strom über die Aufnahmezeit integriert, und eine dynamische Eigenschaft, bei der die Dosisleistung in Betracht gezogen wird, um die an der Röntgenröhre anliegende Spannung zu regeln. Es sei darauf hingewiesen, dass die Raster-Dosimetrievorrichtung Dosisänderungen sehr schnell erkennen kann und somit auch erst eine dynamische kV-Dosisleistungsregelung ermöglicht. Dies wird unter anderem durch die verwendeten Materialien der Raster-Dosimetrievorrichtung begünstigt. Insbesondere das Einfügen von Kunststoffmaterial zwischen die Elektroden erlaubt das Anlegen einer höheren Spannung zwischen den Elektroden im Vergleich zu Luft und somit eine schnellere Detektion der ionisierten Partikel, was zu einer kürzeren Ansprechzeit der Raster-Dosiemetrievorrichtung führt.

Einige Ausführungsformen beziehen sich auf eine Röntgendosisbestimmung, bei der die Röntgenaufnahme beendet wird, sobald ein Dosisschwellwert (Abschaltdosis) erreicht ist.

Kehrt man nun zurück zu den Figuren, so sieht man dort in Fig.1 einen prinzipiellen Aufbau eines Röntgensystems mit einer erfindungsgemäßen Raster-Dosimetrievorrichtung 4.

Eine Röntgenröhre 1 strahlt Röntgenstrahlung durch einen Kollimator 2 aus. Die Aufgabe des Kollimators 2 ist es, den Röntgenstrahl auf die zu untersuchende Objektgröße zu begrenzen. Dies ist eine Grundforderung zur Patientendosisreduktion, da dem Patient nur so viel Dosis wie notwendig appliziert werden soll. Für Röntgenstrahlen funktioniert der Kollimator 2 mittels Absorption. Bei Absorption verwendet man eine Shutter-Kombination aus einem für die jeweilige Strahlung geeigneten Absorbermaterial, z.B. für Röntgenstrahlung meist Blei. Nur Röntgenprimärstrahlung, die sich innerhalb des eingeblendeten Feldes befindet, kann den Kollimator 2 passieren. Nach Passieren des Kollimators 2 trifft die Röntgenprimärstrahlung auf das zu röntgende Objekt 3, hier zum Beispiel einen Menschen, und durchdringt es. Beim Durchdringen des Objekts 3 entsteht Streustrahlung, die die Bildqualität verschlechtert. Hinter dem Objekt 3 ist die erfindungsgemäße Raster-Dosimetrievorrichtung 4 vorgesehen, die einerseits die Streustrahlung absorbiert und andererseits die Strahlendosis bzw. Strahlendosisleistung misst, mit der das Objekt 3 bestrahlt wird. Die Raster-Dosimetrievorrichtung 4 ist vor einem Detektor 5 angebracht, der entweder eine Röntgenkassette mit einem Röntgenfilm oder einen elektronischen Röntgenbildgeber enthält. Die Röntgenröhre 1 ist an einen Röntgengenerator 6 angeschlossen, der eine Hochspannung erzeugt, die notwendig ist, um von der Kathode Elektronen, die über eine Heizwendel emittiert werden, zur Anode zu beschleunigen. Die Elektronen dringen in das Anodenmaterial ein. Dabei werden sie abgebremst und Röntgenstrahlung wird emittiert.

Die Raster-Dosimetrievorrichtung 4 ist in herkömmlicher Weise über einen Vorverstärker 7 mit dem Generator 6 verbunden. Sollte ein Dosisschwellenwert/Dosisleistungssignal anstehen, so wird eine Abschaltung bzw. Regelung des Generators 6 bewirkt, so dass keine Röntgenstrahlung (Abschaltdosis) mehr erzeugt wird bzw. eine kV-Dosisleistungsregelung veranlasst wird. Ferner ist eine Vorverstärkersteuerung 8 vorgesehen. Der Kollimator 2 meldet seine eingeblendete Feldgröße an die Vorverstärkersteuerung 8, wo aus dem FFA (Film-Fokus-Abstand) und der Kollimatorfeldgröße die Messkammerfeldgröße der Raster-Dosimetrievorrichtung 4 berechnet wird. Dieser Korrekturwert Gₓ wird nun dem Vorverstärker 7 zugeführt. Das ebenfalls am Vorstärker 7 anstehende Dosisleistungssignal, das die Raster-Dosimetrievorrichtung 4 bereitstellt, wird dadurch abhängig von der Größe des eingeblendeten Messfeldes unterschiedlich verstärkt.

Wie man in Fig. 1 sieht, lässt sich die Raster-Dosimetrievorrichtung 4 modular in ein bestehendes Röntgensystem einfügen.

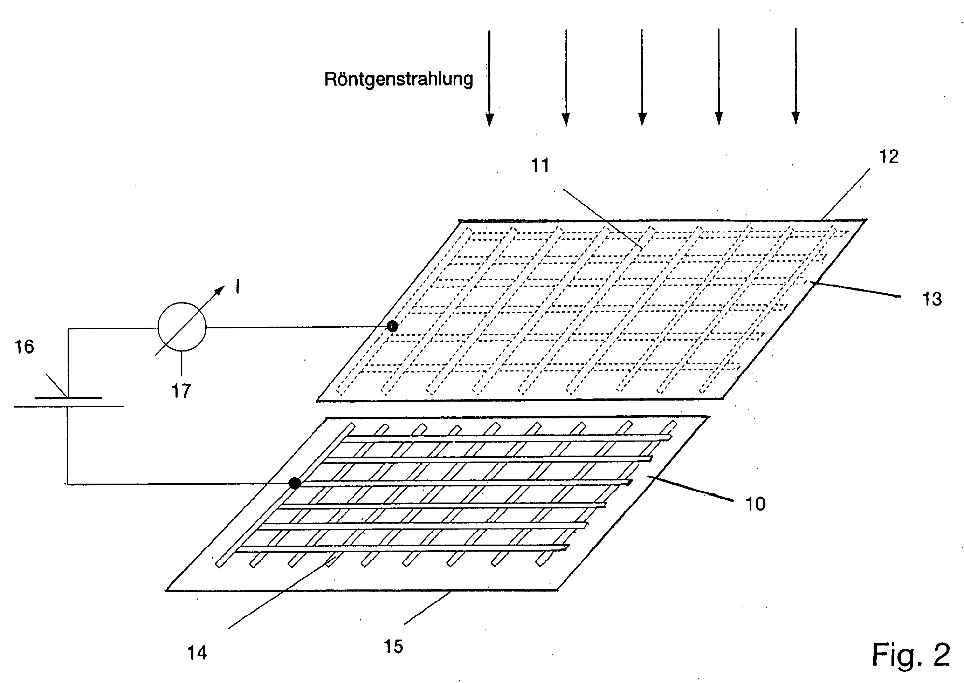

Fig. 2 zeigt eine schematische Ansicht von schräg oben auf eine Ausführungsform der erfindungsgemäßen Raster-Dosimetrievorrichtung 4, die ein oberes Streustrahlenraster 12 in Form von mittels eines fotolithografischen Verfahrens gebildeten Leiterbahnen 11 umfasst. Die Leiterbahnen 11 sind auf einer Unterseite eines oberen Trägers 13 des oberen Streustrahlenrasters 12 angebracht (und sind deshalb gestrichelt gezeichnet). Die Leiterbahnen 11 sind elektrisch miteinander verbunden, so dass sie auf demselben elektrischen Potential liegen.

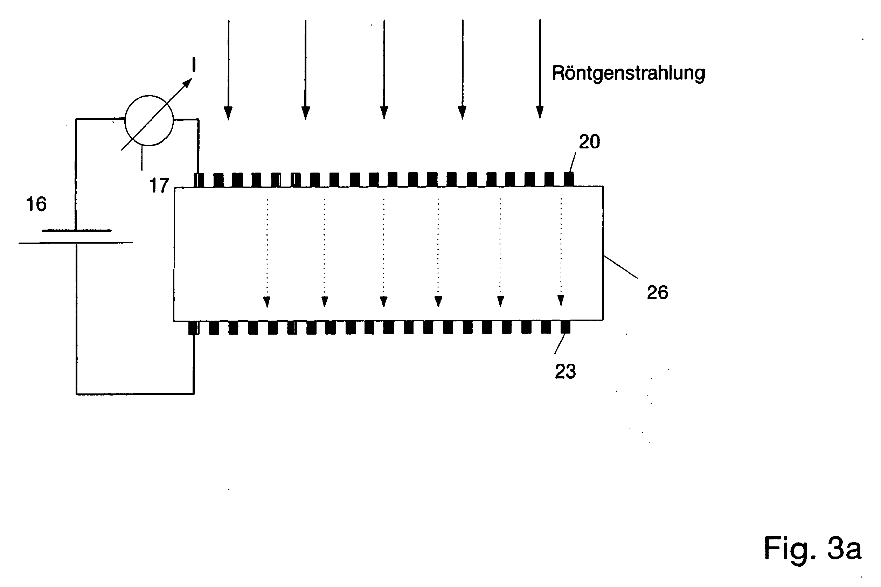

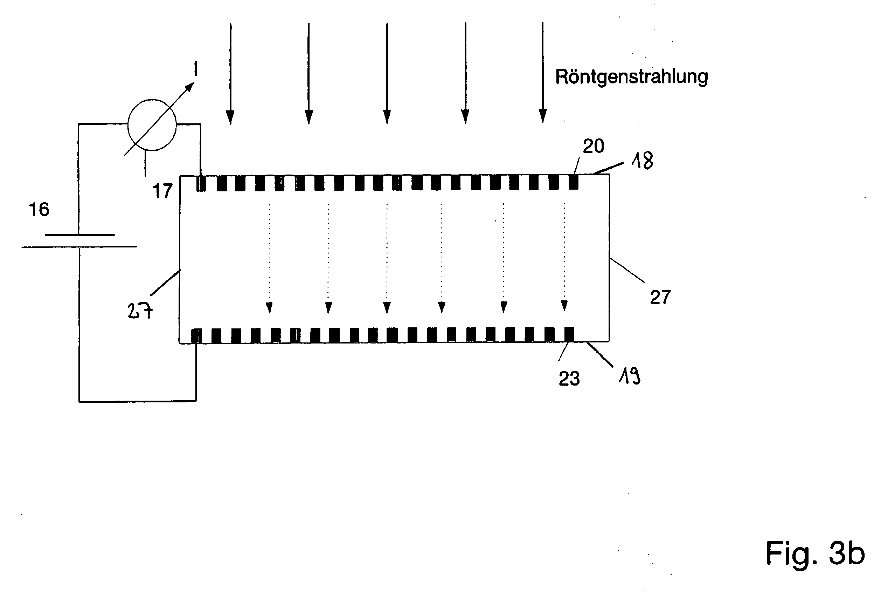

In einem nicht gezeigten Ausführungsbeispiel sind die Leiterbahnen an einem ihrer beiden Ende elektrisch miteinander verbunden, beispielsweise über eine quer zu ihren Enden verlaufende zusätzliche Leiterbahn. Auf einem unteren Träger können ebenfalls, in der Fig. 2 untere Leiterbahnen aufgebracht sein, die entweder parallel (ggf. versetzt) zu den (oberen) Leiterbahnen verlaufen, senkrecht hierzu oder diese unter einem bestimmten Winkel schneidend (nicht gezeigt). Alternativ weisen die oberen und unteren Leiterbahnen auch unterschiedliche Formen auf (siehe hierzu auch die nachstehende Beschreibung zu den Ausführungsbeispielen der Figuren 3 bis 6).

Die Leiterbahnen 11 absorbieren Streustrahlung, so dass nur Röntgenprimärstrahlung durch das obere Streustrahlenraster 12 hindurchgeht. Ferner ist ein unteres Streustrahlenraster 15 gezeigt, das ebenfalls mittels eines fotolithografischen Verfahrens (oder Laserstruktur-Verfahren) auf eine Oberseite eines unteren Trägers 10 aufgebrachte Leiterbahnen 14 aufweist. (Es sei darauf hingewiesen, dass die beiden Streustrahlenraster 12, 15 parallel, vollständig einander überdeckend übereinander liegen und nur aus Gründen der besseren Veranschaulichung versetzt zueinander gezeichnet sind.) Die Leiterbahnen 11 und 14 dieses Beispiels sind jeweils gitterförmig angeordnet. Zwischen den oberen 11 und den unteren Leiterbahnen 14 ist eine Spannungsquelle 16 vorgesehen, die eine elektrische Potentialdifferenz erzeugt. Die Leiterbahnen 11 und 14 wirken also als Platten eines Kondensators, an denen eine Spannung angelegt ist. Im vorliegenden Beispiel liegt eine Spannung von 400 V zwischen den oberen Leiterbahnen 11 und den unteren Leiterbahnen 14 an. Dieses elektrische Potential bewirkt, dass durch Röntgenstrahlung freigesetzte Elektronen von der Anode (hier Leiterbahnen 11) angezogen werden, während die positiv geladenen Moleküle von der Kathode (hier Leiterbahnen 14) angezogen werden. Die Spannungsquelle 16 bleibt während des Messvorgangs mit den Leiterbahnen verbunden. Die Röntgenstrahlung durchdringt zuerst das obere Streustrahlenraster 10, dann den mit Luft gefüllten Zwischenraum und schließlich das untere Streustrahlenraster 13. Im luftgefüllten Zwischenraum ionisiert die Röntgenstrahlung die Luftmoleküle. Zudem kann das obere Streustrahlenraster 10 mit einer Silberleitlack beschichtet werden, aus der mittels Röntgenstrahlung ebenfalls Elektronen freigesetzt werden. Die freigesetzten Elektronen verursachen einen Strom, der mit einem zwischen den Leiterbahnen 11 und 14 geschalteten Strommesser 17 gemessen wird. Der Strom wird vom Vorverstärker 7 messtechnisch aufbereitet zum Generator 6 weiter geleitet. Abhängig von der Shutter-Öffnung des Kollimators 2 wird die Verstärkung im Vorverstärker 7 von der Vorverstärkersteuerung 8 geändert. Der vom Strommesser 17 gemessene Strom kann über eine Zeitdauer aufintegriert werden, woraus eine Angabe über die durch Ionisation erzeugte Ladung Q erhalten wird. Diese Ladung Q, ins Verhältnis gesetzt zur Masse m der Luft, ergibt die Ionendosis, aus der wiederum die Dosis für den Menschen berechnet werden kann. Die Neuerung der Raster-Dosimetrievorrichtung 4 ist, dass im gesamten Röntgenaufnahmefeld gemessen werden kann. Partielle Überstrahlungen führen nicht zur Aufnahmeverlängerung. Dadurch, dass die gesamte Detektorfläche mit der Raster-Dosimetrievorrichtung 4 abgedeckt ist, kann die Positionierung leichter erfolgen. Das System kennt keine Fehlpositionierung der Messkammer mehr, wie sie bei den aus dem Stand der Technik bekannten 3-Felder-Messkammern leicht geschehen kann. Die Raster-Dosimetrievorrichtung 4 verbindet zwei Funktionen (Raster + Dosimetrievorrichtung) im gleichen Aufbau. Die von der Raster-Dosimetrievorrichtung 4 absorbierte Dosis ist geringer als diejenige einer bekannten Hintereinanderschaltung eines herkömmlichen Bleilamellen-Rasters und herkömmlicher Messkammer (z.B. 3-Felder-Messkammer). Die Raster-Dosimetrievorrichtung 4 ist nicht empfindlich gegenüber Temperaturschwankungen, Erschütterungen oder sonstigen äußeren Umwelteinflüssen. Dies gilt insbesondere dann, wenn zwischen den Elektroden keine Luft ist, d.h. wenn ein Kunststoff als Isolator und zu ionisierendes Medium verwendet wird.

Fig. 3a zeigt eine Querschnittsansicht einer weiteren Ausführungsform der Erfindung. Elektrisch verbundene Leiterbahnen 20 sind unmittelbar auf einer Oberseite eines leicht ionisierbaren Isoliermaterials 26 aufgebracht. Auf einer Unterseite des Isoliermaterials 26 sind ebenfalls untere Leiterbahnen 23 angebracht, die ebenfalls miteinander elektrisch verbunden sind, um auf demselben elektrischen Potential zu liegen. Im Unterschied zur Ausführungsform der Figur 2 sind jedoch die oberen Leiterbahnen 20 und die unteren Leiterbahnen 23 nicht gitterförmige Leiterbahnen, sondern zueinander parallele Leiterbahnen 23. Das Isoliermaterial 26 ist aus Kunststoff, beispielsweise aus Polyamid, Polycarbonat oder Poly-N-methyl-alanin. Der vom Strommesser 17 gemessene Strom liegt im Nano-Ampere-Bereich. Während in der Raster-Dosimetrievorrichtung 4 (Luft zwischen den Streustrahlenrastern 10 und 13) aus der Ausführungsform der Figur 2 eine Spannung von 400 V an die Leiterbahnen angelegt wird, wird in der vorliegenden Ausführungsform eine Spannung von 900 V an die Leiterbahnen 20 und 23 angelegt. Allgemein liegt die Spannung, die bei polymeren Kunststoffen als Isolatormaterial angelegt wird, bei 500-900 Volt.

Fig. 3b zeigt eine Querschnittsansicht einer weiteren Ausführungsform der Erfindung. Elektrisch verbundene Leiterbahnen 20 sind unmittelbar auf einer Unterseite eines oberen Trägers 18 angebracht und elektrisch verbundene Leiterbahnen 23 sind auf einer Oberseite eines unteren Trägers 19 angebracht, so dass die Leiterbahnen 20, 23 aufeinander zu orientiert sind und sich zwischen den Leiterbahnen ( = Messelektroden der Dosimetrievorrichtung) 20, 23 nur Luft befindet. Es sei darauf hingewiesen, dass sich insbesondere kein Isoliermaterial zwischen den Leiterbahnen 20, 23 und der Luft befinden darf. Der obere Träger 18 und der untere Träger 19 sind durch elektrisch isolierte Abstandhalter 27 miteinander verbunden. Die zwischen den Leiterbahnen 20, 23 anliegende Spannung beträgt 400 V.

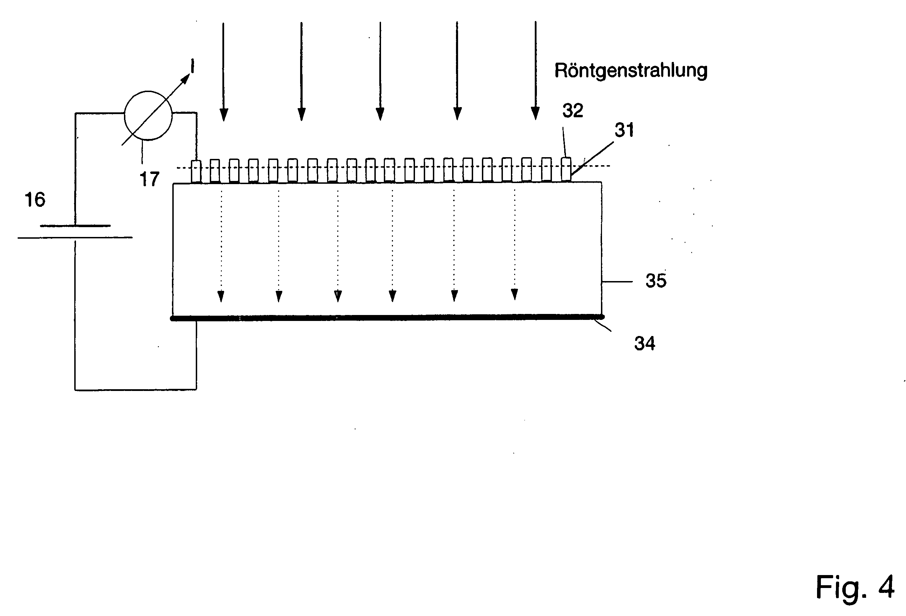

Fig. 4 zeigt eine Querschnittsansicht einer Ausführungsform der Erfindung, bei der zweischichtige Leiterbahnen auf ein Isoliermaterial 35 aufgebracht sind. Die untere Schicht 31 besteht aus Kupfer und auf diese ist eine zweite Schicht 32 z.B. aus Gold (oder eine andere Metallschicht) aufgalvanisiert. (Die beiden Schichten sind durch eine gestrichelte Linie markiert). Wie in den vorherigen Beispielen dienen die zweischichtigen Leiterbahnen als erste Elektrode. Auf der Unterseite des Isoliermaterials 35 liegt eine zweite, gewöhnliche Elektrode 34, die nicht als Streustrahlenraster ausgebildet ist. Zwischen den oberen Leiterbahnen und der Elektrode 34 wird mittels einer Spannungsquelle 16 eine Spannung angelegt, die bewirkt, dass Elektronen aus dem Isoliermaterial 35 von der Anode angezogen werden. Der sich ergebende Stromfluss wird von dem Strommesser 17 gemessen.

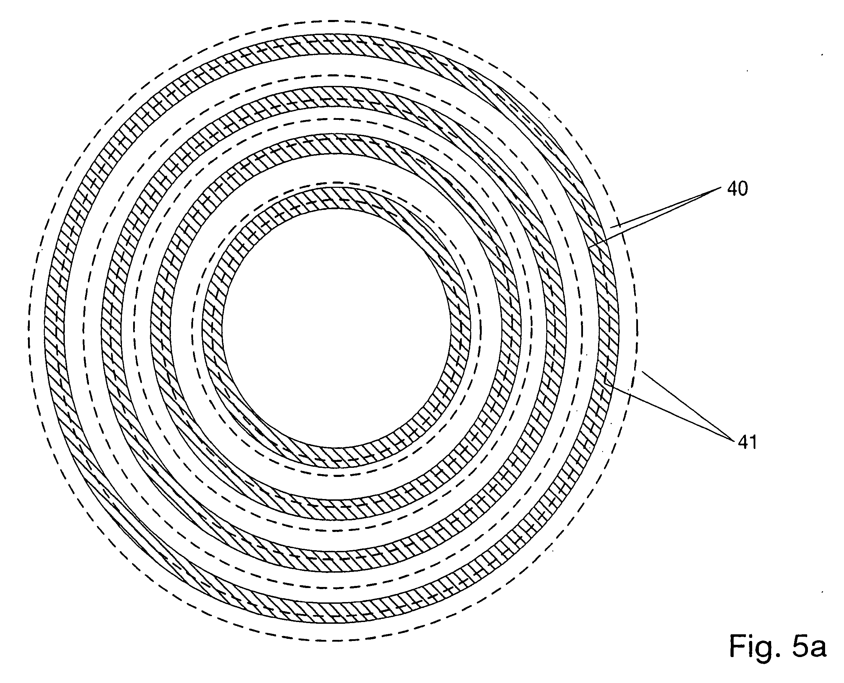

Fig. 5a zeigt eine Draufsicht auf zwei übereinander angeordnete Streustrahlenraster, die kreisförmig angeordnet sind. Die gestrichelte Linie 41 gibt die Außenränder (aufgrund der Überdeckung durch die Leiterbahnen des oberen Streustrahlenrasters) der konzentrischen Leiterbahnen auf dem unteren Streustrahlenraster an, während die schwarze Linie 40 die Außenränder der Leiterbahnen auf dem oberen Streustrahlenraster angibt. Jeweils ein Kreis auf dem unteren Streustrahlenraster gehört zu einem Kreis auf dem oberen Streustrahlenraster, und der jeweilige Kreis auf dem unteren Streustrahlenraster weist einen etwas größeren Radius als der jeweilige Kreis auf dem oberen Streustrahlenraster auf. Der Abstand zwischen zwei zusammengehörigen Kreisen ist umso größer je weiter die Kreise vom Zentrum beabstandet sind (geometrischer Strahlensatz). Der durch die gegenseitige Leiterbahnen-Anordnung erzielte "Fokussierung" ist durch den Abstand von der Röntgenröhre 1 zur Raster-Dosimetrievorrichtung 4 bestimmt.

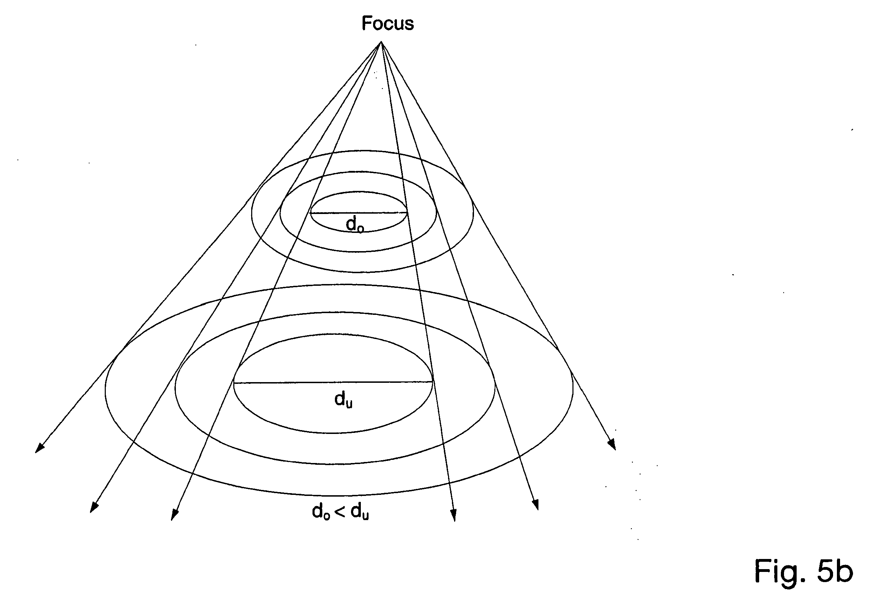

Fig. 5b zeigt eine 3D-Ansicht der in Fig. 5a gezeigten Streustrahlenraster. Ein oberer (dₒ) und ein unterer (dᵤ) Kreisring gehören zusammen, wobei der obere (dₒ) Kreisring etwas kleiner als der zugehörige untere Kreisring ist. Die Fokussierung erlaubt, dass nur Röntgenprimärstrahlung von einem punktförmigen Fokus der Röntgenröhre unter einem bestimmten Abstand (Fokus zur Raster-Dosimetrievorrichtung 4) weitgehend ungehindert die Raster-Dosimetrievorrichtung 4 passieren kann.

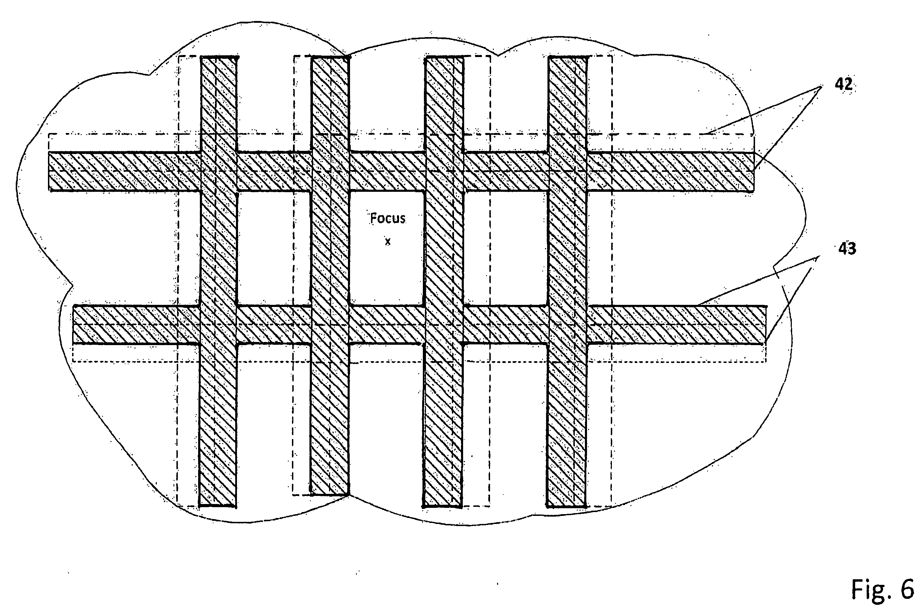

Fig. 6 zeigt eine Draufsicht auf zwei übereinander angeordnete gitterförmige Streustrahlenraster. Die gestrichelte Linie 42 gibt die Außenränder der Leiterbahnen auf dem unteren Streustrahlenraster an, während die ungestrichelte Linie 43 die Außenränder der Leiterbahnen auf dem oberen Streustrahlenraster angibt. Jeweils eine Linie auf dem unteren Streustrahlenraster gehört zu einer Linie auf dem oberen Streustrahlenraster. Der Abstand zwischen zwei zusammengehörigen Bahnen ist umso größer je weiter die Linien vom Zentrum beabstandet sind (geometrischer Strahlensatz). Die durch die gegenseitige Leiterbahnen-Anordnung erzielte "Fokussierung" ist auf den Primärröntgenstrahlabstand von der Röntgenröhre 1 (Röntgenfokus) zur Raster-Dosimetrievorrichtung 4 abgestimmt.

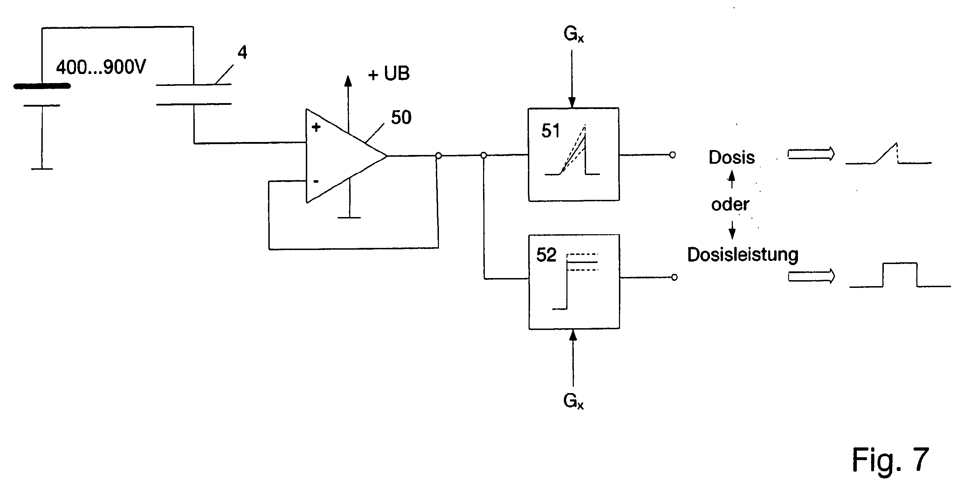

Fig. 7 zeigt eine schematische Messschaltung, die eine Angabe über die Dosis und die Dosisleistung erlaubt. Der in der Raster-Dosimetrievorrichtung 4 durch Ionisation entstehende Strom wird von einem Operationsverstärker 50 gemessen und dient gleichzeitig als Impedanzwandler.

Die Plusversorgung (400...900V) wird kontinuierliche an eine Messelektrode angelegt.

Die Minuselektrode wird "schwebend" über den Operationsverstärker 50 auf Masse referenziert. Am Operationsverstärker 50 wird der Elektronenstrom gemessen, der während der Aufnahme anliegt. Das Ausgangssignal wird entweder von einem Integrator 51 aufintegriert und erlaubt somit eine Angabe über die Dosis, oder von einem Messverstärker 52 gemessen und erlaubt somit eine Angabe über die momentane Dosisleistung. Die Dosisleistung stellt die Dosis pro Zeiteinheit dar und ermöglicht so eine Regelung des Röntgengenerators 6. Bei dieser Regelung wird die Zeit, die für die Röntgenaufnahme zur Verfügung steht, vorgegeben. In einigen Ausführungsformen wird die Regelung aber auch ohne Zeitvorgabe verwendet.

Ein nicht gezeigter Messfeldaufnehmer liefert einen Korrekturwert Gₓ, welcher das Feld des Kollimatorfeldes und den Abstand zur Raster-Dosimetrievorrichtung 4 berücksichtigt, an den Integrator 51 und/oder den Messverstärker 52. Abhängig von der Messfeldgröße wird das Messfeldsignal unterschiedlich hoch verstärkt.

Der zu Beginn der Röntgenaufnahme an die Röntgenröhre 1 angelegte Standard- bzw. Durchschnittswert für die Röntgenspannung wird dann bei laufender Aufnahme in Abhängigkeit von der von der Raster-Dosimetrievorrichtung 4 gemessenen Dosisleistung geregelt. Die gemessene Dosisleistung hängt vom Körperbau (Knochen, Gewebe) des Patienten ab. Ist die gemessene Dosisleistung zu gering (d.h. zu wenig Röntgenstrahlung erreichen den Detektor), so wird innerhalb der Röntgenzeit, die an der Röntgenröhre anliegende Spannung hochgeregelt. Ist die Dosisleistung zu hoch, so wird die Spannung nach unten geregelt. Da die Röntgenzeit sehr kurz ist, muss die Raster-Dosimetrievorrichtung 4 sehr schnell Änderungen in der Dosisleistung detektieren können. Die Reaktionszeit der Raster-Dosimetrievorrichtung 4 wird durch den Einsatz von Kunststoff als Isoliermaterial und die damit einhergehende höhere Elektrodenspannung reduziert.

## Patentansprüche

1. Raster-Dosimetrievorrichtung, umfassend
ein erstes Streustrahlenraster (12), das zugleich als eine erste Elektrode einer Dosimetrievorrichtung dient, und
eine von der ersten Elektrode beabstandete zweite Elektrode (15), wobei zwischen den beiden Elektroden eine Spannung anlegbar ist.

2. Raster- Dosimetrievorrichtung gemäß Anspruch 1,
wobei das als erste Elektrode dienende Streustrahlenraster zusätzlich mit einer Elektrodenschicht beschichtet ist.

3. Raster-Dosimetrievorrichtung gemäß einem der vorhergehenden Ansprüche, ferner umfassend
ein Strommessgerät, das den zwischen der ersten und zweiten Elektrode aufgrund einer lonisationswirkung der Röntgenstrahlung fließenden Strom misst.

4. Raster-Dosimetrievorrichtung gemäß einem der vorhergehenden Ansprüche,
wobei das erste Streustrahlenraster durch Aufbringen von Leiterbahnen mittels einer Leiterplattenbeschichtungstechnik hergestellt ist.

5. Raster-Dosimetrievorrichtung gemäß Anspruch 4,
wobei die Leiterbahnen einschichtig oder mehrschichtig aus Blei, Zinn, Gold, Wismut und/oder Kupfer in beliebiger Abfolge hergestellt sind.

6. Raster-Dosimetrievorrichtung gemäß Anspruch 4 oder 5,
wobei 30 bis 500 Leiterbahnen pro Zentimeter aufgebracht sind.

7. Raster-Dosimetrievorrichtung gemäß einem der Ansprüche 1 bis 3,
wobei das Streustrahlenraster in Lamellenform aus schmalen Streifen von Röntgenstrahlen absorbierendem Material und Röntgenstrahlen durchlässigen Abstandhaltern aufgebaut ist, wobei die Streifen parallel zur Strahlung ausgerichtet sind.

8. Raster-Dosimetrievorrichtung gemäß einem der vorhergehenden Ansprüche,
wobei die zweite Elektrode als ein zweites Streustrahlenraster ausgebildet ist.

9. Raster-Dosimetrievorrichtung gemäß Anspruch 8,
wobei das erste und/oder das zweite Streustrahlenraster eine Gitterlinienstruktur aufweist.

10. Raster-Dosimetrievorrichtung gemäß Anspruch 9,
wobei das erste und das zweite Streustrahlenraster jeweils parallele geradlinige Leiterbahnen aufweisen, die zueinander um 90° versetzt sind.

11. Raster-Dosimetrievorrichtung gemäß einem der vorhergehenden Ansprüche,
wobei wenigstens eines der beiden Streustrahlenraster in Form konzentrischer Kreise ausgebildet ist.

12. Raster-Dosimetrievorrichtung gemäß einem der vorhergehenden Ansprüche,
wobei zwischen den beiden Elektroden ein Isolierkörper aus Kunststoff angeordnet ist.

13. Raster-Dosimetrievorrichtung gemäß einem der vorhergehenden Ansprüche,
wobei die Raster-Dosimetrievorrichtung als Modul aufgebaut ist und in ein bestehendes Röntgensystem in einen Röntgendetektor integrierbar ist.

14. Verfahren zur Röntgendosisbestimmung, umfassend
Bestrahlen eines ersten Streustrahlenrasters, das zugleich als erste Elektrode einer Dosimetrievorrichtung dient, und einer von der ersten Elektrode beabstandete zweite Elektrode mit einer Röntgenstrahlung, wobei zwischen den beiden Elektroden eine Spannung angelegt ist,
Messen eines Stromflusses zwischen den beiden Elektroden, der durch die Ionisierung des zwischen den beiden Elektroden liegenden Materials verursacht wird, um eine Angabe über die Dosis oder Dosisleistung zu machen.

15. Verfahren zur Röntgendosisbestimmung gemäß Anspruch 14, ferner umfassend Regeln der Röntgenspannung und/oder des Röntgenstromes eines Röntgengenerators in Abhängigkeit der gemessenen Dosisleistung während einer vorgegebenen Röntgenzeit.

## Claims

1. Grid dosimetry device, comprising a first scattered radiation grid (12) which simultaneously serves as a first electrode of a dosimetry device, and a second electrode (15) spaced apart from the first electrode, wherein a voltage can be applied between the two electrodes.

2. Grid dosimetry device as claimed in Claim 1, wherein the scattered radiation grid which serves as first electrode is additionally coated with an electrode layer.

3. Grid dosimetry device as claimed in any one of the preceding claims, further comprising a current measuring device which measures the current flowing between the first and second electrodes on the basis of an ionisation effect of the X-ray radiation.

4. Grid dosimetry device as claimed in any one of the preceding claims, wherein the first scattered radiation grid is produced by application of conductive tracks by means of a circuit board coating technique.

5. Grid dosimetry device as claimed in Claim 5, wherein the conductive tracks are produced in a single layer or in multiple layers from lead, tin, gold, bismuth and/or copper in any sequence.

6. Grid dosimetry device as claimed in Claim 4 or 5, wherein 30 to 500 conductive tracks per centimetre are applied.

7. Grid dosimetry device as claimed in any one of Claims 1 to 3, wherein the scattered radiation grid is constructed in lamellar form from narrow strips of material which absorbs X-rays spacers which are transparent to X-rays, wherein the strips are oriented parallel to the radiation.

8. Grid dosimetry device as claimed in any one of the preceding claims, wherein the second electrode is constructed as a second scattered radiation grid.

9. Grid dosimetry device as claimed in Claim 8, wherein the first and/or the second scattered radiation grid has a grid line structure.

10. Grid dosimetry device as claimed in Claim 9, wherein the first and the second scattered radiation grid each have parallel rectilinear conductive tracks which are offset by 90° with respect to one another.

11. Grid dosimetry device as claimed in any one of the preceding claims, wherein at least one of the two scattered radiation grids is constructed in the form of concentric circles.

12. Grid dosimetry device as claimed in any one of the preceding claims, wherein an insulating member made from plastic is disposed between the two electrodes.

13. Grid dosimetry device as claimed in any one of the preceding claims, wherein the grid dosimetry device is constructed as a module and can be integrated into an X-ray detector in an existing X-ray system.

14. Method of determining the X-ray dose, comprising irradiation of a first scattered radiation grid which simultaneously serves as a first electrode of a dosimetry device, and a second electrode spaced apart from the first electrode, with X-ray radiation, wherein a voltage is applied between the two electrodes, and measurement of a current flow between the two electrodes which is caused by the ionisation of the material lying between the two electrodes in order to give details of the dose or dose rate.

15. Method of determining the X-ray dose as claimed in Claim 14, further comprising adjustment of the X-ray voltage and/or of the X-ray current of an X-ray generator as a function of the measured dose rate during a specified X-ray time.

## Revendications

1. Dosimètre à trame, comprenant
une première grille anti-diffusante (12), laquelle sert en même temps de première électrode d'un dosimètre, et
une deuxième électrode (15) à distance de la première,
une tension pouvant être appliquée entre les deux électrodes.

2. Dosimètre à trame selon la revendication 1,
dans lequel la grille anti-diffusante, servant de première électrode, est recouverte en plus d'une couche d'électrode.

3. Dosimètre à trame selon l'une quelconque des revendications précédentes comprenant, de plus,
un ampèremètre qui mesure le courant passant entre la première et la deuxième électrode dû à un effet ionisant du rayonnement X.

4. Dosimètre à trame selon l'une quelconque des revendications précédentes,
dans lequel la première grille anti-diffusante est réalisée par application de pistes conductrices au moyen d'une technique d'application de pistes conductrices.

5. Dosimètre à trame selon la revendication 4,
dans lequel les pistes conductrices sont constituées d'une ou plusieurs couches de plomb, d'étain, d'or, de bismuth et/ou de cuivre dans un ordre quelconque.

6. Dosimètre à trame selon la revendication 4 ou la revendication 5,
dans lequel on applique 30 à 500 pistes conductrices par centimètre.

7. Dosimètre à trame selon l'une quelconque des revendications 1 à 3,
dans lequel la grille anti-diffusante a une forme lamellaire constituée de bandes étroites d'une matière qui absorbe les rayons X et de distanceurs perméables aux rayons X, les bandes étant parallèles au rayonnement.

8. Dosimètre à trame selon l'une quelconque des revendications précédentes,
dans lequel la deuxième électrode est conçue comme une deuxième grille anti-diffusante.

9. Dosimètre à trame selon la revendication 8,
dans lequel la première et/ou la deuxième grille anti-diffusante a une structure en lignes de quadrillage.

10. Dosimètre à trame selon la revendication 9,
dans lequel la première et la deuxième grille anti-diffusante présentent chacune des pistes conductrices rectilignes parallèles décalées de 90° les unes par rapport aux autres.

11. Dosimètre à trame selon l'une quelconque des revendications précédentes,
dans lequel au moins l'une des deux grilles anti-diffusantes a la forme de cercles concentriques.

12. Dosimètre à trame selon l'une quelconque des revendications précédentes,
dans lequel il y a, entre les deux électrodes, un corps isolant en matière plastique.

13. Dosimètre à trame selon l'une quelconque des revendications précédentes,
dans lequel le dosimètre à trame est conçu comme un module qui peut être intégré dans un système à rayons X existant à l'intérieur d'un détecteur à rayons X.

14. Procédé de détermination d'une dose de rayons X comprenant
l'irradiation d'une première grille anti-diffusante qui sert, en même temps, de première électrode d'un dosimètre, et d'une deuxième électrode distante de la première, avec un rayonnement X, une tension étant appliquée entre les deux électrodes,
la mesure d'un courant entre les deux électrodes provoqué par l'ionisation de la matière située entre les deux électrodes, afin de pouvoir donner des informations sur la dose ou l'intensité de dose.

15. Procédé de détermination d'une dose de rayons X selon la revendication 14,
comprenant, de plus, le réglage de la tension de rayons X et/ou du courant de rayons X d'un générateur de rayons X en fonction de l'intensité de dose mesurée pendant un temps d'exposition donné
